# EUROPEAN PATENT APPLICATION

(11) **EP 4 675 809 A1**
(43) Date of publication of application: **07.01.2026**
(21) Application number: 23959192.8
(22) Date of filing: 23.11.2023
(51) Int. Cl.: H01M 50/342, H01M 50/35, H01M 50/143

(54) **CASING, BATTERY CELL, BATTERY AND ELECTRIC DEVICE**

(71) Applicant: Contemporary Amperex Technology Co., Ltd., Ningde, Fujian 352100 (CN)
(72) Inventor: GU, Mingguang, Ningde, Fujian 352100 (CN); LI, Yao, Ningde, Fujian 352100 (CN); CHEN, Shilong, Ningde, Fujian 352100 (CN); LIU, Sike, Ningde, Fujian 352100 (CN)
(74) Representative: Ran, Handong
(86) International application number: PCT/CN2023/133564
(87) International publication number: WO 2025/107220

(57) **Abstract**

A casing (10), a battery cell (20), a battery (100) and an electric device. A first notch (11) and a second notch (12) are formed on the same wall of the casing (10), the second notch (12) is located on one side of the first notch (11) in the direction of width, the projections of the first notch (11) and the second notch (12) in the direction of thickness of the casing (10) are spaced apart from each other, and the thickness of the casing (10) at the first notch (11) is less than the thickness of the casing (10) at the second notch (12). When the pressure inside the casing is extremely large, the casing (10) can preferentially crack at the first notch (11) and is folded at the second notch (12) to form an opening for pressure relief, thereby reducing the risk of explosion of the battery cell (20).

## Description

### TECHNICAL FIELD

The present application relates to the field of batteries, and in particular, to a shell, a battery cell, a battery, and an electric device.

### BACKGROUND

In the prior art, the amount of gas generated inside the shell of a battery gradually increases over time with the use of the battery, leading to an increase in the internal pressure of the shell. When the internal pressure of the shell of the battery is excessively high, the battery may be at risk of explosion. To reduce the risk of an explosion of the battery, the shell of the battery is provided with a score. When the internal pressure of the shell of the battery is excessively high, the shell of the battery preferentially cracks at the notch, thereby releasing the pressure. In the related art, the opening formed after the score of the shell of the battery cracks is relatively small, which is not conducive to discharging gas.

### SUMMARY

In view of the above problems, the present application provides a shell, a battery cell, a battery, and an electric device, which can enable a larger opening of the cracked shell, thereby facilitating the discharge of gas.

In a first aspect, the present application provides a shell for a battery cell, where a first score and a second score are formed on the same wall of the shell, the second score is located on one side of the width direction of the first score, and projections of the first score and the second score in the thickness direction of the shell are spaced apart from each other; the thickness of the shell at the first score is a first thickness, and the thickness of the shell at the second score is a second thickness, the first thickness (Hi) being less than the second thickness (H₂).

In the technical solutions of the embodiments of the present application, a first score is provided on one wall of the shell of the battery cell. After the battery or the battery cell has been used for a period of time, when the internal pressure of the shell increases, the shell preferentially cracks at the first score to release the internal pressure. On the same wall, a second score is provided on one side in the width direction of the first score. The projections of the first score and the second score in the thickness direction of the shell are spaced apart from each other, and the thickness of the shell at the first score is less than the thickness of the shell at the second score. Such a design allows the shell to fold at the second score when the shell cracks at the first score. In this way, a relatively large opening can be formed between the first score and the second score as a pressure relief opening, and gas can be quickly discharged from the opening, thereby reducing the pressure inside the battery or the battery cell in time and further reducing the risk of explosion of the battery.

In some embodiments, the shell includes a bottom wall and a side wall connected to the bottom wall. An opening is formed on one side of the side wall away from the bottom wall. The first score and the second score are formed on the bottom wall.

An electrode assembly in the battery cell preferentially expands toward the side wall. Therefore, providing the first score and the second score on the bottom wall can reduce the risk of the first score being ruptured due to compression by the electrode assembly.

In some embodiments, the shell includes an inner surface and an outer surface. The first score is provided on the outer surface, and the second score is provided on the inner surface.

In this way, the first score is provided on the outer surface of the shell, and the second score is provided on the inner surface of the wall where the first score is located, so that the wall thickness retained at the first score can be on a different side from the wall thickness retained at the second score, thereby increasing the strength of the shell and preventing the shell from cracking under normal internal pressure.

In some embodiments, in the width direction of the first score, distances between the first score and the second score are equal at all points.

In this way, the cracked shell at the first score is subjected to a uniform force when flipping at the second score, which is conducive to the formation of the pressure relief opening.

In some embodiments, the first score and the second score are arranged in parallel.

In this way, a larger pressure relief opening is easily formed when the shell cracks at the first score and flips at the second score.

In some embodiments, in the arrangement direction of the first score and the second score, the distance between the first score and the second score is a first distance, and the ratio of the first distance to the dimension of the shell in the arrangement direction ranges from 1/8 to 1/3.

In this way, by configuring the arrangement distance between the first score and the second score on the shell to match the dimension of the shell, the cracked part of the shell between the first score and the second score is allowed to easily fold around the second score relative to the bottom wall, enabling the formed pressure relief opening to effectively discharge gas.

In some embodiments, the length of the second score is greater than the length of the first score, and in the extension direction of the first score, the end of the second score exceeds the end of the first score.

In this way, the shell cracks at the first score. The end of the second score exceeds the end of the first score in the extension direction of the first score. The crack easily extends from the end of the first score to the second score, which is conducive to the formation of the pressure relief opening.

In some embodiments, in the width direction of the first score, the second scores are provided on both sides of the first score.

In this way, the shell cracks at the first score. The crack extends from the first score to both sides of the first score until reaching the second score. The shell flips at the two second scores, so that the pressure relief opening bounded by the second scores on both sides of the first score is easily formed, thereby further expanding the area of the pressure relief opening and improving the pressure relief efficiency of the shell.

In some embodiments, the second scores, which are located on both sides of the first score, respectively, are symmetrically arranged relative to the first score.

In this way, the second scores, which are symmetrical relative to the first score, allow the folding time and the path on both sides of the first score to be substantially the same, resulting in uniform force distribution and facilitating the formation of the pressure relief opening.

In some embodiments, the length of the first score is parallel or perpendicular to the edge of the wall where the first score is located.

In this way, the first score can guide the shell to form a crack parallel or perpendicular to the edge of the wall where the first score is located, which facilitates the extension of the crack and the formation of the pressure relief opening.

In some embodiments, the center of the first score coincides with the center of the wall where the first score is located.

In this way, the first score can guide the shell to preferentially crack at the center of the wall where the first score is located, which is conducive to discharging gas. In addition, the wall where the first score is located has a sufficient margin for cracking to form the pressure relief opening, so that the area of the pressure relief opening is as large as possible, thereby improving pressure relief efficiency.

In some embodiments, the width of the first score exhibits a decreasing trend in a direction from the surface of the shell toward the bottom of the first score.

In this way, the shape of the shell retained at the first score tends to become sharp from the surface of the shell to the bottom of the first score, which facilitates stress concentration at the first score and guides the shell to preferentially crack at the bottom of the first score for pressure relief. In addition, the wall where the first score is located may be integrally formed by using a punching process, forming the shell with the first score. The forming efficiency is relatively high, and the strength of the formed shell is relatively large.

In some embodiments, a step surface is formed on the first score, and the step surface is substantially parallel to the surface of the shell.

A plurality of step surfaces of different widths are formed on the first score in a direction from the surface of the shell to the bottom of the first score. The plurality of step surfaces may be formed by punching a plurality of times. The manufacturing efficiency of the wall where the first score is located is relatively high. In addition, the plurality of step surfaces substantially parallel to the surface of the shell can reduce the punching forming force and increase the service life of a punch.

In some embodiments, the width of the second score exhibits a decreasing trend in a direction from the surface of the shell to the bottom of the second score.

In this way, it is conducive to guiding the shell to fold at the second score after the first score cracks, so that the shell is forced open to form the pressure relief opening.

In some embodiments, a bottom surface, a first side surface, and a second side surface are formed on the second score; an angle formed between the first side surface and the bottom surface is a first angle, and an angle formed between the second side surface and the bottom surface is a second angle, the second angle being greater than or equal to the first angle.

In this way, the inclination angle of the second score on one side close to the edge of the shell is greater than the inclination angle of the second score on one side close to the first score, making it easier for the part of the shell between the first score and the second score to fold at the second score when the first score cracks, thereby forming a larger pressure relief opening area.

In some embodiments, the first thickness ranges from 0.08 mm to 0.33 mm.

In this way, the range of the first thickness may correspond to the range of the thickness of the shell, which is conducive to guiding the shell to preferentially crack at the first score when the internal pressure of the shell is excessively large. In addition, the first thickness within the corresponding range can ensure that the strength of the wall where the first score is located is sufficient when the internal pressure of the shell is normal.

In some embodiments, a third score is formed on the shell, the third score is connected to the first score, and the length of the third score is less than the length of the first score.

In this way, when the shell cracks at the first score because the internal pressure of the shell is extremely large, the cracking path may continue to extend along the third score, which is conducive to increasing the cracking area.

In some embodiments, the third score extends in a direction from the first score to the second score.

In this way, the third score is connected to the first score, so that the shell can be guided to crack along traces of the first score and the third score, without excessive tearing and damaging the entire shell. In addition, the cracked part of the shell is still attached to the wall where the first score is located, which reduces the risk of a short circuit resulting from fragments flying out or even overlapping positive and negative electrodes of the battery cell assembly.

In some embodiments, the third score is connected to the end of the first score.

In this way, the shell may be forced open along the traces of the first score and the third score from the joint between the first score and the third score toward both sides and fold at the second score. Such an extension direction is conducive to the formation of the pressure relief opening.

In some embodiments, there are a plurality of third scores, and the end of each first score is connected to the third score.

In this way, the plurality of third scores may all be used as cracking paths, further increasing the cracking range and improving the pressure relief efficiency of the battery cell.

In some embodiments, the joint between the first score and the third score is subjected to a passivation treatment.

In this way, by implementing a passivation treatment on the joint between the first score and the third score to ensure that the shape of the retained shell is not too sharp, stress is dispersed, thereby preventing the shell from cracking under normal pressure.

In some embodiments, the width of the third score is equal to the width of the first score.

In this way, it is beneficial for the shell to continue to crack along the trace of the third score after cracking at the first score.

In a second aspect, the present application provides a battery cell. The battery cell includes the shell according to the above embodiments.

In some embodiments, the battery cell includes an end cover and a battery cell assembly. An opening is formed on the shell. The opening is lidded with the end cover. The battery cell assembly is arranged in the shell.

In a third aspect, the present application provides a battery. The battery includes the battery cell according to the above embodiments.

According to a fourth aspect, the present application provides an electric device. The electric device includes the battery or the battery cell according to the above embodiments. The battery or the battery cell is configured to provide electric energy.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic structural diagram of a vehicle according to some embodiments of the present application;
FIG. 2 is a schematic diagram of an exploded structure of a battery according to some embodiments of the present application;
FIG. 3 is a schematic diagram of an exploded structure of a battery cell according to some embodiments of the present application;
FIG. 4 is a schematic structural diagram of a shell according to some embodiments of the present application;
FIG. 5 is a schematic structural diagram of a shell in a Y direction according to some embodiments of the present application;
FIG. 6 is a schematic structural diagram of a shell in a Z direction according to some embodiments of the present application;
FIG. 7 is a schematic diagram of a cross-sectional structure of a shell in an A-A direction according to some embodiments of the present application;
FIG. 8 is a schematic diagram of a partially enlarged cross-sectional structure of the shell in FIG. 7;
FIG. 9 is a schematic structural diagram of a shell in a Z direction according to some other embodiments of the present application;
FIG. 10 is a schematic diagram of a cross-sectional structure of a shell in a Z direction according to yet some other embodiments of the present application;
FIG. 11 is an enlarged schematic structural diagram of portion B of the shell in FIG. 8;
FIG. 12 is an enlarged schematic structural diagram of portion C of the shell in FIG. 8; and
FIG. 13 is an enlarged schematic structural diagram of portion E of the shell in FIG. 6.

Reference numerals in the detailed description are as follows:
Vehicle 1000, Motor 300, Controller 400;
Battery 100, Case 210, First Part 211, Second Part 212, Battery Cell 20, Battery Cell Assembly 20, End cover 30;
Shell 10, First Score 11, Step Surface 111, Slope Surface 112, Second Score 12, Bottom Surface 120, First Side Surface 121, Second Side Surface 122, Opening 101, Bottom Wall 110, Side Wall 120, Inner Surface 130, Outer Surface 140, Third Score 13.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the claimed scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", and "provided with", and any variations thereof in the description and claims of the present application and the above drawing description encompass non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the noted technical features. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" or the like indicate orientations or positional relationships based on those shown in the drawings. They are merely for the convenience of describing the present application and simplifying the description, rather than indicating or implying that the apparatus or element referred to must have a specific orientation or be constructed and operated in the specific orientation, and thus should not be construed as a limitation to the present application.

In the description of the embodiments of the present application, unless otherwise clearly specified and defined, the technical terms "mount", "interconnect", "connect", "fix", or the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

At present, judging from the trends in the market, the application of power batteries is becoming increasingly widespread. Power batteries are not only applied in energy storage power systems such as hydropower, thermal power, wind power, and solar power stations, but also widely applied in electric transportation vehicles such as electric bicycles, electric motorcycles, or electric cars, as well as in military equipment, aerospace, and other fields. With the continuous expansion of the application field of power batteries, the market demand for power batteries is also constantly increasing.

When the battery is used, gas is formed inside the shell of the battery. As the gas increases, the internal pressure of the shell of the battery increases. When the pressure inside the shell of the battery reaches a specific value, the shell of the battery explodes due to excessive pressure, resulting in non-directional bursting. The burst shell of the battery may fly apart, and the flying shell of the battery may cause property damage and personal injury. In addition, the flying fragments of the shell of the battery may result in a short circuit due to overlapping the positive electrode and the negative electrode, thereby affecting the safety of the battery in use.

In order to reduce the risk of explosion of the battery and improve the safety of the battery in use, the shell of the battery is provided with a pressure relief mechanism for releasing the internal pressure when the internal pressure or temperature of the battery reaches a threshold. For example, a score is provided on the surface of the shell to guide the shell to preferentially crack at the score when the internal pressure of the shell is extremely large, thereby releasing the pressure and preventing the shell from flying apart. In addition, the gas accumulated inside the battery can be discharged from the pressure relief opening formed by cracking at the score, thereby reducing the pressure inside the battery. However, the area of the pressure relief opening formed by a single score provided on the shell is relatively small, which is not conducive to discharging gas. In addition, as the battery undergoes charging and discharging cycles, the battery cell expands, causing the shell that wraps the battery cell to deform. This deformation pulls the pressure relief mechanism arranged on the shell, so that the weak area of the pressure relief mechanism is prone to rupture, thereby affecting the anti-explosion effect.

Based on the above considerations, in order to solve the problem that the pressure relief opening formed by the score on the shell is not conducive to discharging gas inside the battery, the embodiments of the present application provide a shell for a battery cell. A first score and a second score located on one side in the width direction of the first score are provided on a certain wall of the shell, so that when the internal pressure of the battery cell reaches a threshold, the shell of the battery cell can crack from the first score. Additionally, the cracked part of the shell folds at the second score relative to the surface of the shell, thereby forming a pressure relief opening that is bounded at least by positions where the first score and the second score are located. On such a shell, a large enough pressure relief opening may be formed when the internal pressure of the battery cell is extremely large, thereby effectively discharging gas accumulated in the battery cell, improving pressure relief efficiency, and further reducing the risk of explosion of the battery.

The battery cell disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toys may include stationary or mobile electric toys, such as game consoles, electric car toys, electric ship toys, or electric airplane toys. The spacecrafts may include airplanes, rockets, space shuttles, spaceships, or the like.

In the following embodiments, for ease of description, the present application is illustrated by taking a vehicle 1000 as an example of the electric device according to an embodiment of the present application.

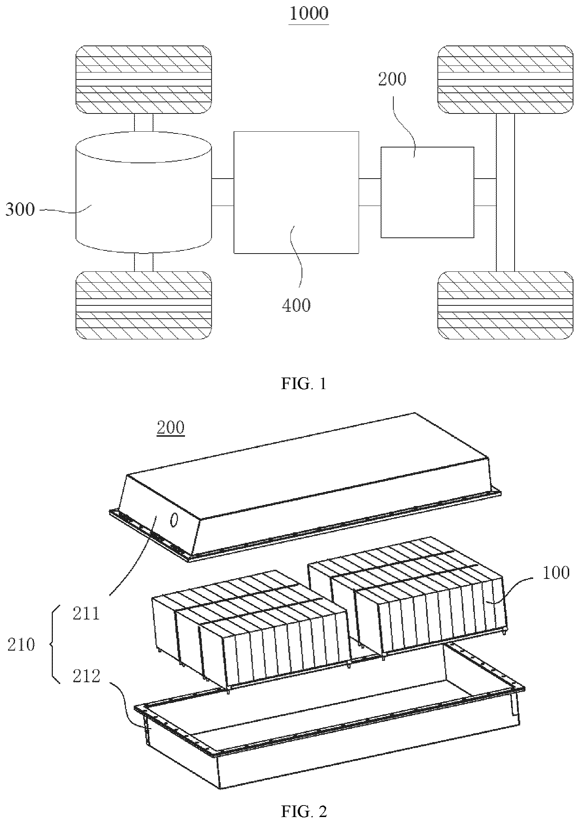

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 200 is arranged inside the vehicle 1000, and the battery 200 may be arranged at the bottom, head, or tail of the vehicle 1000. The battery 200 may be configured to power the vehicle 1000. For example, the battery 200 may serve as an operation power source of the vehicle 1000. The vehicle 1000 may further include a controller 400 and a motor 300. The controller 400 is configured to control the battery 200 to power the motor 300, e.g., for the operation power needed by the vehicle 1000 for start-up, navigation, and driving.

In some embodiments of the present application, the battery 200 may not only serve as an operation power source for the vehicle 1000 but also as a driving power source for the vehicle 1000, replacing or partially replacing fuel or natural gas, to provide driving power for the vehicle 1000.

Referring to FIG. 2, FIG. 2 is an exploded view of a battery 200 according to some embodiments of the present application. The battery 200 includes a case 210 and battery cells 100. The battery cells 100 are accommodated in the case 210. The case 210 is configured to provide an accommodating space for the battery cells 100, and the case 210 may be of a variety of structures. In some embodiments, the case 210 may include a first part 211 and a second part 212. The first part 211 and the second part 212 are mutually lidded onto each other, and the first part 211 and the second part 212 jointly define an accommodating space for accommodating the battery cells 100. The second part 212 may be of a hollow structure with an opening 101 at one end, and the first part 211 may be of a plate-like structure. The first part 211 is lidded onto the side of the opening 101 of the second part 212, so that the first part 211 and the second part 212 jointly define the accommodating space. The first part 211 and the second part 212 may also each be of a hollow structure with an opening 101 on one side, and the opening 101 side of the first part 211 is lidded onto the opening 101 side of the second part 212. Certainly, the case 210 formed by the first part 211 and the second part 212 may be in various shapes, such as a cylindrical shape and a rectangular parallelepiped shape.

In the battery 200, there may be a plurality of battery cells 100, and the plurality of battery cells 100 may be connected in series, in parallel, or in series-parallel. The series-parallel connection means that both series connection and parallel connection are present for the connection among the plurality of battery cells 100. The plurality of battery cells 100 may be directly connected in series, in parallel, or in series-parallel, and then the whole formed by the plurality of battery cells 100 is accommodated in the case 210. Certainly, the case may also be that in the battery 200, a plurality of battery cells 100 are first connected in series, in parallel, or in series-parallel to form battery 200 modules, and then the plurality of battery 200 modules are connected in series, in parallel, or in series-parallel to form a whole and accommodated in the case 210. The battery 200 may further include other structures. For example, the battery 200 may further include a busbar component for achieving an electrical connection among the plurality of battery cells 100.

Each battery cell 100 may be a secondary battery 200 or a primary battery 200; it may also be a lithium-sulfur battery 200, a sodium-ion battery 200, or a magnesium-ion battery 200, but is not limited thereto. The battery cell 100 may be cylindrical, flat, rectangular parallelepiped-shaped, or in other shapes.

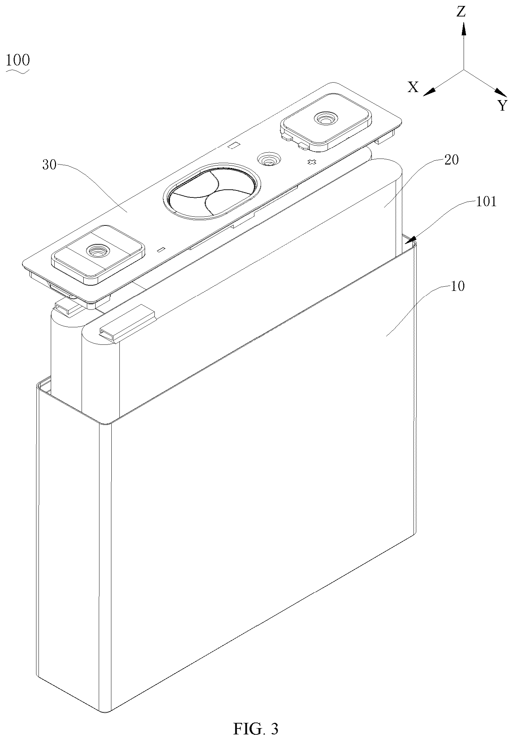

Referring to FIG. 3, FIG. 3 is a schematic diagram of an exploded structure of a battery cell 100 according to some embodiments of the present application. The battery cell 100 refers to the smallest unit forming a battery 200. As shown in FIG. 3, the battery cell 100 includes an end cover 30, a shell 10, a battery cell assembly 20, and other functional components.

The end cover 30 refers to a component that is lidded onto the opening 101 of the shell 10 to isolate the internal environment of the battery cell 100 from the external environment. Without limitation, the shape of the end cover 30 may be adapted to the shape of the shell 10 to fit the shell 10. Optionally, the end cover 30 may be made of a material with a certain hardness and strength (for example, an aluminum alloy), so that the end cover 30 is not easily deformed when being squeezed or collided. This enables the battery cell 100 to have higher structural strength, and the safety performance can also be improved. Functional components, such as electrode terminals, may be arranged on the end cover 30. The electrode terminal may be configured to be electrically connected with the battery cell assembly 20 to output or input the electric energy of the battery cell 100. The end cover 30 may also be made of a variety of materials, such as copper, iron, aluminum, stainless steel, aluminum alloy, and plastic, which is not specifically limited in the embodiments of the present application. In some embodiments, an insulating member may also be arranged on the inner side of the end cover 30, and the insulating member may be configured to isolate an electrical connection component in the shell 10 from the end cover 30 to reduce the risk of a short circuit. Illustratively, the insulating member may be made of plastic, rubber, or the like.

The shell 10 is an assembly configured to form the internal environment of the battery cell 100 in combination with the end cover 30. The formed internal environment may be used to accommodate the battery cell assembly 20, electrolyte, and other components. The shell 10 and the end cover 30 may be independent components. An opening 101 may be formed on the shell 10. At the opening 101, the end cover 30 is lidded onto the opening 101 to form the internal environment of the battery cell 100. Without limitation, the end cover 30 and the shell 10 may be integrated. Specifically, the end cover 30 and the shell 10 may form a common connection surface before other components are placed in the shell, and when the interior of the shell 10 needs to be encapsulated, the end cover 30 is lidded onto the shell 10. The shell 10 may be in various shapes and dimensions, such as a rectangular parallelepiped, a cylinder, and a hexagonal prism. Specifically, the shape of the shell 10 may be determined based on the specific shape and dimensions of the battery cell assembly 20. The shell 10 may be made of a plurality of materials, such as copper, iron, aluminum, stainless steel, aluminum alloy, and plastic, which is not specifically limited in the embodiments of the present application.

The battery cell assembly 20 is a component where the electrochemical reaction occurs in the battery cell 100. One or more battery cell assemblies 20 may be accommodated in the shell 10. The battery cell assembly 20 is mainly formed by winding or stacking a positive electrode plate and a negative electrode plate, and a separator is generally provided between the positive electrode plate and the negative electrode plate. The portions of the positive electrode plate and the negative electrode plate that contain the active substance constitute the body part of the battery cell assembly 20, and the portions of the positive electrode plate and the negative electrode plate that do not contain the active substance each constitute a tab. The positive electrode tab and the negative electrode tab may be located together at one end of the body part or separately at two ends of the body part. During the charging and discharging process of the battery 200, the positive electrode active substance and the negative electrode active substance react with the electrolyte, and the tabs are connected with the electrode terminals to form a current circuit.

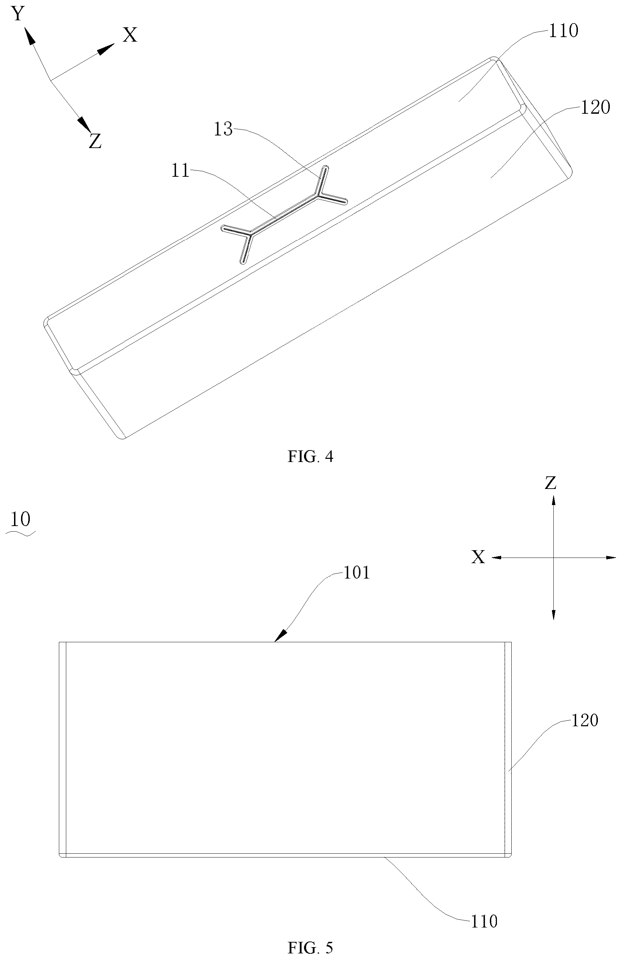

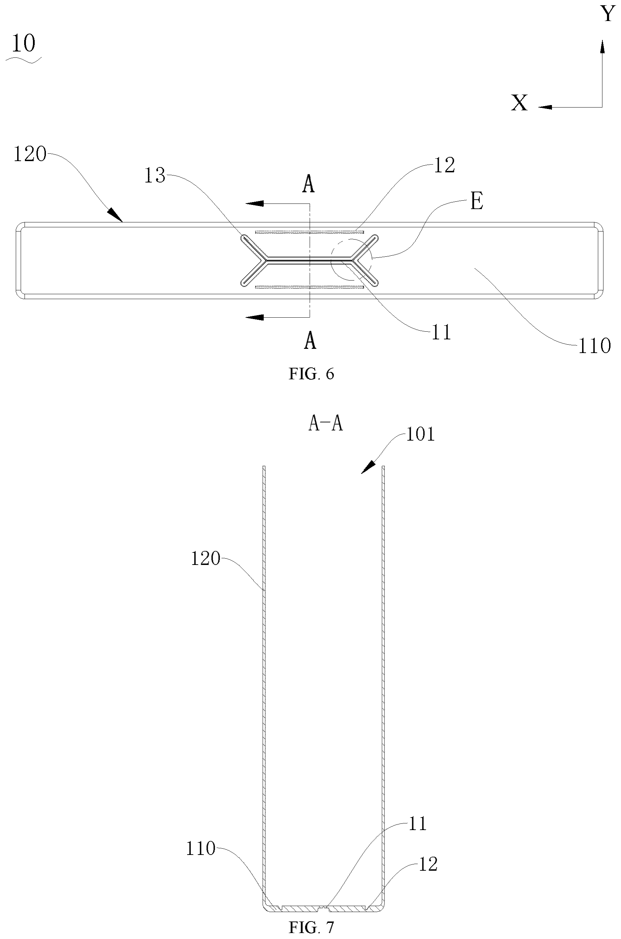

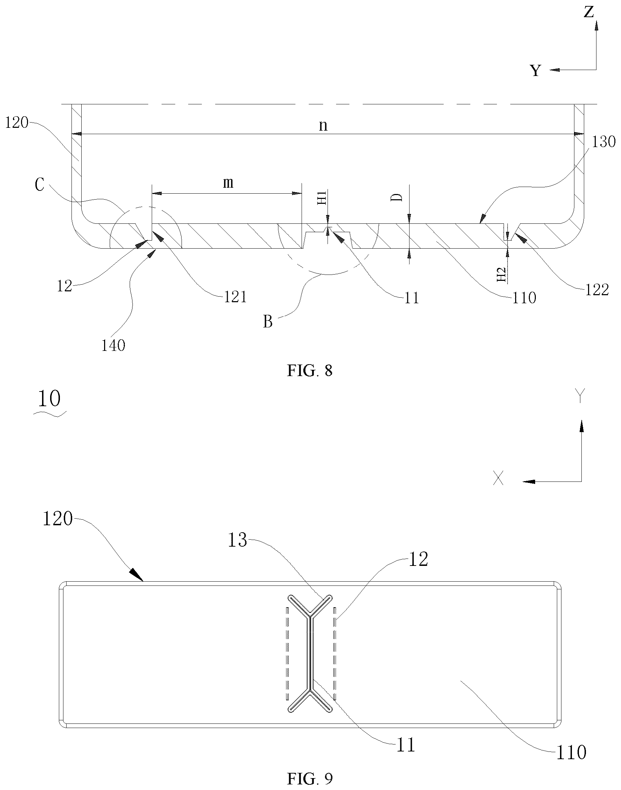

According to some embodiments of the present application, referring to FIG. 4 and referring further to FIG. 5 to FIG. 8, FIG. 7 is a schematic diagram of a cross-sectional structure of a shell 10 in an A-A direction according to some embodiments of the present application, and FIG. 8 is a schematic diagram of an enlarged cross-sectional structure of a wall of the shell 10 provided with a first score 11 and a second score 12 in FIG. 7. The embodiments of the present application provide a shell 10 for a battery cell 100. A first score 11 and a second score 12 are provided on the same wall of the shell 10. The second score 12 is located on one side in the width direction of the first score 11. Projections of the first score 11 and the second score 12 in the thickness direction of the shell 10 are spaced apart from each other. The thickness of the shell 10 at the first score 11 is the first thickness. The thickness of the shell 10 at the second score 12 is the second thickness. The first thickness (Hi) is less than the second thickness (H₂).

As shown in the figure, the X direction in the figure is the length direction of the shell 10, the Y direction is the width direction of the shell 10, and the Z direction is the thickness direction of the shell 10. In other words, the Z direction is the height direction of the shell 10. The length, width, and height directions of the battery cell 100 are consistent with the length, width, and height directions of the shell 10.

In some embodiments, the shell 10 is in the shape of a rectangular parallelepiped. The shell 10 is provided with two opposite surfaces in each of the length direction, the width direction, and the height direction. The length direction, the width direction, and the height direction of the shell 10 are mutually perpendicular to one another. The shell 10 may be provided with four side walls 120 in the length direction and the width direction, including a front side wall, a rear side wall, a left side wall, and a right side wall, and may be provided with only one solid wall in the height direction and one opening 101 opposite to the solid wall. Components such as the battery cell assembly 20 and electrolyte may enter from the opening 101 and be accommodated inside the shell 10.

Specifically, the first score 11 and the second score 12 may both be provided on a certain wall in the X direction, the Y direction, or the Z direction of the shell 10. The wall thickness of the shell 10 may be relatively uniform at positions other than the first score 11 and the second score 12, and the wall thickness D of the large surface of the shell 10 may range from 0.6 mm to 1.0 mm. The first score 11 may be recessed from the outer surface 140 to the inner surface 130 of the shell 10, or may be recessed from the inner surface 130 to the outer surface 140 of the shell 10. The second score 12 may similarly be recessed from the outer surface 140 to the inner surface 130 of the shell 10, or recessed from the inner surface 130 to the outer surface 140 of the shell 10. The first score 11 and the second score 12 may extend along a straight or curved path, and the extension direction is the length direction of the first score 11 or the second score 12. The width of the first score 11 is much less than the length of the first score 11, and the width of the second score 12 is also much less than the length of the second score 12.

As shown in FIG. 8, the distance between the deepest recessing point of the first score 11 and the surface opposite to the surface where the first score 11 is located is denoted as the first thickness H₁. The distance between the deepest recessing point of the second score 12 and the surface opposite to the surface where the second score 12 is located is denoted as the second thickness H₂. The first thickness H₁ is less than the second thickness H₂, and both the first thickness H₁ and the second thickness H₂ are less than the wall thickness D of the large surface of the shell 10. H₁ < H₂ < D. It can be understood that the strength of the shell 10 is relatively low at the thin wall, so that bending or cracking easily occurs. In addition, the smaller wall thickness indicates the lower strength. The first thickness H₁ may be the minimum value of the wall thickness of the shell 10, so that when the internal pressure of the shell 10 is excessively large, the shell 10 preferentially cracks at the first score 11, and the first score 11 easily forms a crack in the shell 10.

As shown in FIG. 6 or FIG. 9, the second score 12 is located on one side in the width direction of the first score 11, and the extension paths of the first score 11 and the second score 12 may be parallel. The projections of the first score 11 and the second score 12 in the thickness direction of the shell 10 are spaced apart from each other. As shown in FIG. 6, the first score 11 and the second score 12 may be located at substantially the same position in the length direction of the shell 10, but are spaced by a certain distance in the width direction of the shell 10. As shown in FIG. 9, the first score 11 and the second score 12 may be spaced by a certain distance in the length direction of the shell 10, and may be located at substantially the same position in the width direction of the shell 10.

The first thickness H₁ is less than the second thickness H₂, and the second thickness H₂ is less than the wall thickness D of the large surface of the shell 10. When the internal pressure of the shell 10 reaches the threshold, the shell 10 first breaks from the first score 11, and after the shell 10 breaks from the first score 11, the cracked part of the shell 10 bends along the second score 12, which serves as a fold line. The cracked part of the shell 10 may flip about the second score 12 toward the exterior of the shell 10 or toward the interior of the shell 10, so that a pressure relief opening can be formed in the interval between the first score 11 and the second score 12.

The first score 11 is provided on one wall of the shell 10 of battery cell 100, so that when the internal pressure of the battery 200 or the battery cell 100 increases after being used for a period of time, the shell 10 preferentially cracks at the first score 11 to release the internal pressure. On the same wall, the second score 12 is provided on one side in the width direction of the first score 11. The projections of the first score 11 and the second score 12 in the thickness direction of the shell 10 are spaced apart from each other, and the thickness of the shell 10 at the first score 11 is less than the thickness of the shell 10 at the second score 12. Such a design enables the shell 10 to fold at the second score 12 when the shell cracks at the first score 11, and then a large pressure relief opening can be formed between the first score 11 and the second score 12, so that gas can be quickly discharged from the pressure relief opening, thereby reducing the pressure inside the battery 200 or the battery cell 100 in time and further reducing the risk of explosion of the battery 200.

Referring to FIG. 3 to FIG. 5, in some embodiments, the shell 10 includes a bottom wall 110 and a side wall 120 connected to the bottom wall 110. An opening 101 is formed on one side of the side wall 120 away from the bottom wall 110. The first score 11 and the second score 12 are formed on the bottom wall 110.

Specifically, the bottom wall 110 is a wall of the shell 10 located at the bottom of the battery cell assembly 20 in the height direction, and the bottom wall 110 may be opposite to the opening 101. The side wall 120 is a surrounding wall of the shell 10 in the length direction and the width direction. The bottom wall 110 and the side wall 120 of the shell 10 may be integrally formed. For example, the integrated shell 10 is formed by punching, die-casting, or the like.

In some embodiments, the first score 11 and the second score 12 may also be formed on a certain wall surface of the side wall 120 facing forward, backward, left, or right.

It can be understood that as the positive electrode active substance and the negative electrode active substance are intercalated into or deintercalated from ions in the charging and discharging cycle of the battery 200, the battery cell assembly 20 may expand due to the accumulation thickness of the side reaction of a battery cell system, the stripping of graphite sheets, or the like. That is, the positive electrode plate and the negative electrode plate expand outward. The electrode plate is generally arranged parallel to the side wall 120 of the shell 10, so that the battery cell assembly 20 expands toward the side wall 120.

Therefore, providing the first score 11 and the second score 12 on the bottom wall 110 can reduce the risk of the first score 11 and the second score 12 being ruptured due to compression by the electrode assembly.

In some embodiments, the shell 10 includes an inner surface 130 and an outer surface 140. The first score 11 is provided on the outer surface 140, and the second score 12 is provided on the inner surface 130.

Specifically, the shell 10 forms the internal environment of the battery cell 100. The battery cell assembly 20 is accommodated inside the shell 10. The surface on one side facing the battery cell assembly 20 is the inner surface 130. The surface of the shell 10 facing the external environment of the battery cell 100 is the outer surface 140. The wall thickness of the shell 10 may be the distance between the inner surface 130 and the outer surface 140.

Illustratively, the first score 11 is provided on the outer surface 140 of the bottom wall 110, and the bottom surface 120 of the first score 11 is closer to the inner surface 130. The second score 12 is provided on the inner surface 130 of the bottom wall 110, and the bottom surface 120 of the second score 12 is closer to the outer surface 140. The bottom wall 110 retains a certain thickness on one side close to the inner surface 130 at the first score 11, and retains a certain thickness on one side close to the outer surface 140 at the second score 12. The bottom wall 110 has a thinner wall thickness at the first score 11 and the second score 12, and thin walls of the first score 11 and the second score 12 are distributed on the inner side and the outer side of the bottom wall 110, which is conducive to dispersing the stress of the bottom wall 110 and increasing the strength of the shell 10.

In this way, the first score 11 is provided on the outer surface 140 of the shell 10, and the second score 12 is provided on the inner surface 130 of the wall where the first score 11 is located, so that the wall thickness retained at the first score 11 can be on a different side from the wall thickness retained at the second score 12, thereby increasing the strength of the shell 10 and preventing the shell 10 from cracking under normal internal pressure.

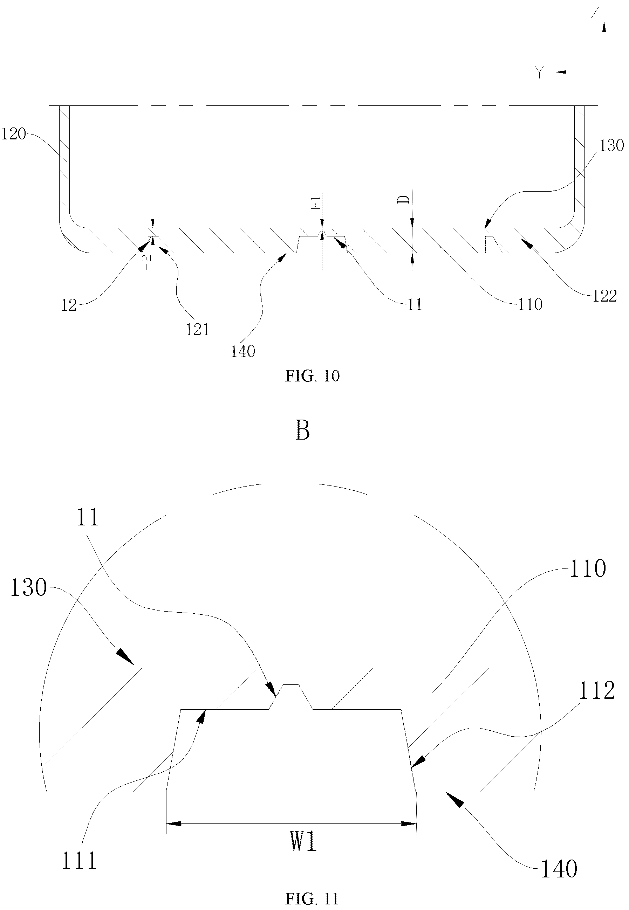

In some embodiments, the first score 11 and the second score 12 may both be provided on the outer surface 140 of the same wall or may both be provided on the inner surface 130 of the same wall. Referring to FIG. 10, the first score 11 and the second score 12 are both provided on the outer surface 140 of the bottom wall 110, and the bottom wall 110 retains a smaller thickness on one side close to the inner surface 130 at the first score 11 and the second score 12. In this embodiment, the magnitudes of the first thickness and the second thickness should ensure that the strength at the first score 11 and the second score 12 is sufficient under normal internal pressure of the shell 10, preventing rupture.

Referring again to FIG. 6, in some embodiments, in the width direction of the first score 11, distances between the first score 11 and the second score 12 are equal at all points.

Specifically, the second score 12 is provided on one side in the width direction of the first score 11, and the width direction of the second score 12 is consistent with the width direction of the second score 12. In the width direction of the first score 11, the distances between the first score 11 and the second score 12 are equal at all points. This can indicate that the distances between the width center of the first score 11 and the width center of the second score 12 are equal at all positions of the first score 11. After the shell 10 cracks at the first score 11, a pressure relief opening with a uniform width can be formed between the first score 11 and the second score 12. The cracked part of the shell 10 has a uniform width. The cracked part of the shell 10 is disengaged from the shell 10 at the first score 11 and flips about the second score 12. The flipped part of the shell 10 is subjected to a uniform force.

In this way, the cracked shell 10 at the first score 11 is subjected to uniform force when flipping at the second score 12, which is conducive to the formation of the pressure relief opening.

In some embodiments, the first score 11 and the second score 12 are arranged in parallel.

Specifically, the first score 11 and the second score 12 may both extend along a straight line, and the first score 11 and the second score 12 extend in the same direction. The extension direction of the first score 11 and the second score 12 is the length direction of the first score 11 and the second score 12, and the length direction of the first score 11 is consistent with the length direction of the second score 12. The first score 11 is parallel to the second score 12. The distances between the first score 11 and the second score 12 are equal at all points in the length direction.

In this way, the shell 10 cracks at the first score 11. The part of the shell 10 that cracks between the first score 11 and the second score 12 may have a relatively uniform boundary. The width of the boundary is substantially equal to the distance between the first score 11 and the second score 12, so that a larger pressure relief opening is easily formed when the shell 10 flips at the second score 12.

In some embodiments, in an arrangement direction of the first score 11 and the second score 12, the distance between the first score 11 and the second score 12 is a first distance, and the ratio of the first distance to the dimension of the shell 10 in the arrangement direction ranges from 1/8 to 1/3.

Specifically, as shown in FIG. 6 and FIG. 8, the first score 11 and the second score 12 may be arranged in the width direction of the shell 10. As shown in FIG. 9, the first score 11 and the second score 12 may also be arranged in the width direction of the shell 10. In some other embodiments, the first score 11 and the second score 12 may also be arranged in the height direction of the shell 10.

Illustratively, referring to FIG. 8, the first score 11 and the second score 12 are arranged on the bottom wall 110 in the width direction of the shell 10. The distance between the closest point of the first score 11 to the second score 12 and the closest point of the second score 12 to the first score 11 in the Y direction is denoted as a first distance m. The width of the shell 10 is denoted as n, and the ratio m/n of the first distance to the width dimension of the shell 10 has a range of 1/8 < m/n < 1/3. For example, the ratio m/n of the first distance to the width dimension of the shell 10 may be 1/7, 1/6, 1/5, or 1/4.

The ratio of the first distance to the width dimension of the shell 10 is less than 1/3 but greater than 1/8. The distance between the first score 11 and the second score 12 matches the dimension of the shell 10, so that the cracked part of the shell 10 between the first score 11 and the second score 12 easily folds around the second score 12 relative to the bottom wall 110, and the formed pressure relief opening can effectively discharge gas.

In this way, setting the arrangement distance between the first score 11 and the second score 12 on the shell 10 facilitates the shell 10 folding relative to the wall where the first score 11 is located after the shell cracks.

Referring again to FIG. 6, in some embodiments, in the extension direction of the first score 11, the length of the second score 12 is greater than the length of the first score 11, and the end of the second score 12 exceeds the end of the first score 11.

Specifically, the extension direction of the first score 11 is the length direction of the first score 11. The second score 12 may be parallel to the first score 11. The extension direction of the second score 12 is the same as the extension direction of the first score 11. The midpoint in the length direction of the first score 11 and the midpoint in the length direction of the second score 12 share the same position in the length direction of the first score 11. The first score 11 and the second score 12 are each provided with two ends in the length direction. The two ends of the second score 12 in the length direction extend farther than the two ends of the first score 11.

In this way, the shell 10 cracks at the first score 11. The end of the second score 12 exceeds the end of the first score 11 in the extension direction of the first score 11. The crack easily extends from the end of the first score 11 to the second score 12, which is conducive to the formation of the pressure relief opening.

Referring to FIG. 6 and FIG. 7, in some embodiments, in the width direction of the first score 11, the second scores 12 are provided on both sides of the first score 11.

Specifically, the width of the first score 11 is much less than the length of the first score 11, and the first score 11 is in the shape of a thin strip or a line. The number of first scores 11 may be one, and the number of second scores 12 on the wall where the first score 11 is located may be two. The first score 11 and the second score 12 are provided on the bottom wall 110. The first score 11 is provided between the two second scores 12 in the X direction or the Y direction.

In this way, the shell 10 cracks at the first score 11. The crack extends from the first score 11 to both sides of the first score 11 until reaching the second score 12. The shell 10 flips at the two second scores 12, so that the pressure relief opening bounded by the second scores 12 on both sides of the first score 11 is easily formed, thereby further expanding the area of the pressure relief opening and improving the pressure relief efficiency of the shell 10.

Referring to FIG. 6 and FIG. 8, in some embodiments, the second scores 12, which are located on both sides of the first score 11, respectively, are symmetrically arranged relative to the first score 11.

Specifically, the first score 11 may extend along a straight path. The distances between the second scores 12 on both sides of the first score 11 and the first score 11 are the same at all points in the extension direction of the first score 11. The paths along which the shell 10 cracks from the first score 11 to the second scores 12 on both sides of the first score 11 may be the same. The shell 10 that cracks between the first score 11 and the second scores 12 on both sides may form two substantially identical pieces, so that the second scores 12 on both sides of the first score 11 may fold at the same time. During a cracking process, the shell 10 between the first score 11 and the second scores 12 experiences forces on both sides of the first score 11 that are approximately equal in magnitude.

In this way, the second scores 12, which are symmetrical relative to the first score 11, allow the folding time and the path on both sides of the first score 11 to be substantially the same, resulting in uniform force distribution and facilitating the formation of the pressure relief opening.

Referring to FIG. 6 and FIG. 9, in some embodiments, the length direction of the first score 11 is parallel or perpendicular to the edge of the wall where the first score 11 is located.

Specifically, as shown in FIG. 6, the length direction of the first score 11 is parallel to the long side of the wall where the first score 11 is located and is perpendicular to the short side of the wall where the first score 11 is located. The width direction of the first score 11 is consistent with the width direction of the shell 10. The short side of the wall where the first score 11 is located is the edge of the wall where the first score 11 is located in the width direction of the shell 10. The second score 12 may be provided on both sides of the first score 11 in the width direction and is parallel to the first score 11. The second score 12 is also parallel to the long side of the wall where the first score 11 is located and is perpendicular to the short side of the wall where the first score 11 is located. In this embodiment, the length of the short side of the wall where the first score 11 is located ranges from 20 mm to 40 mm or from 40 mm to 60 mm.

In some embodiments, as shown in FIG. 9, the length direction of the first score 11 may also be parallel to the direction of the short side of the wall where the first score 11 is located and is perpendicular to the long side of the wall where the first score 11 is located. In this embodiment, the width direction of the first score 11 is consistent with the length direction of the shell 10. The length of the short side of the wall where the first score 11 is located ranges from 40 mm to 60 mm or is greater than 60 mm.

In this way, the first score 11 can guide the shell 10 to form a crack parallel or perpendicular to the edge of the wall where the first score 11 is located, which facilitates the extension of the crack and the formation of the pressure relief opening.

Referring further to FIG. 6, in some embodiments, the center of the first score 11 coincides with the center of the wall where the first score 11 is located.

Specifically, the wall where the first score 11 is located may be in various shapes, such as rectangular, circular, elliptical, or polygonal. Illustratively, the shell 10 is in the shape of a rectangular parallelepiped. The first score 11 is located on the bottom wall 110. The bottom wall 110 is parallel to an XY plane. The center of the projection of the first score 11 in the Z direction coincides with the center of the projection of the bottom wall 110 in the Z direction. It is easy to understand that the projections of the first score 11 and the bottom wall 110 in the Z direction are located on the XY plane. The first score 11 is located at the central position of the bottom wall 110.

In this way, the first score 11 can guide the shell 10 to preferentially crack at the center of the wall where the first score 11 is located, which is conducive to discharging gas. In addition, the wall where the first score 11 is located has a sufficient margin for cracking to form the pressure relief opening, so that the area of the pressure relief opening is as large as possible, thereby improving pressure relief efficiency.

Referring to FIG. 8 and FIG. 11, FIG. 10 is an enlarged schematic structural diagram of a cross section of the shell 10 at the first score 11 in FIG. 8. In some embodiments, the width W₁ of the first score 11 exhibits a decreasing trend in a direction from the surface of the shell 10 toward the bottom of the first score 11.

Specifically, the first score 11 is provided on the outer surface 140 of the bottom wall 110 and is recessed from the outer surface 140 of the bottom wall 110 to the inner surface 130 of the bottom wall 110. The bottom of the first score 11 is close to the inner surface 130 of the bottom wall 110. The cross-sectional shape of the first score 11 may be trapezoidal. As shown in FIG. 11, the width W₁ of the first score 11 is maximum on the outer surface 140 of the bottom wall 110. The width W₁ of the first score 11 is minimum at the bottom of the first score 11. Moreover, the width W₁ of the first score 11 exhibits a decreasing trend from the outer surface 140 of the bottom wall 110 to the bottom of the first score 11. The width W₁ of the first score 11 may gradually decrease from the outer surface 140 of the bottom wall 110 to the bottom of the first score 11, or may suddenly decrease at a certain position between the outer surface 140 of the bottom wall 110 and the bottom of the first score 11.

The width W₁ of the first score 11 exhibits a decreasing trend in a direction from the surface where the first score is located to the bottom of the first score 11, and the shape of the shell 10 retained at the first score 11 becomes sharper from the surface to the bottom of the first score 11. The width W₁ of the first score 11 is minimum at the bottom of the first score 11, and the shape of the shell 10 retained at the bottom of the first score 11 is the sharpest. In this way, it is beneficial for the stress to concentrate at the bottom of the first score 11. The shell 10 is guided to preferentially crack at the bottom of the first score 11, thereby releasing the pressure of the shell 10.

The first score 11 may be integrally formed with the wall where the first score 11 is located by using a punching process, forming the shell 10 with the first score 11. The forming efficiency is relatively high, and the strength of the shell 10 at the first score 11 is relatively large, thereby ensuring that the shell 10 does not easily rupture before the internal pressure reaches the threshold.

Referring further to FIG. 11, in some embodiments, a step surface 111 is formed on the first score 11, and the step surface 111 is substantially parallel to the surface of the shell 10.

Specifically, a step surface 111 is formed between the bottom of the first score 11 and the surface where the first score 11 is located. The width of the step surface 111 is less than the width of the first score 11 on the surface of the shell 10 and is greater than the width of the first score 11 at the bottom. The width W₁ of the first score 11 may slowly decrease from the surface of the shell 10 to the step surface 111, decrease abruptly at the step surface 111, and then gradually decrease from the step surface 111 to the bottom of the first score 11. The bottom surface formed at the bottom of the first score 11 may be substantially parallel to the step surface 111 and may also be substantially parallel to the outer surface 140 and the inner surface 130 of the shell 10.

A slope surface 112 connecting the surface of the shell 10 and the step surface 111 may be formed between the surface of the shell 10 and the step surface 111. A slope surface 112 connecting the step surface 111 and the bottom of the first score 11 may be formed between the step surface 111 and the bottom of the first score 11. The step surface 111 may be substantially parallel to the surface of the shell 10. The slope surface 112 is inclined to the surface of the shell 10 and is also inclined to the step surface 111. It can be understood that when an angle formed between the slope surface 112 and the step surface 111 is 90°, the width W₁ of the first score 11 remains unchanged. The larger the deviation of the angle formed between the slope surface 112 and the step surface 111 from 90°, the faster the width W₁ of the first score 11 changes.

A plurality of step surfaces 111 of different widths are formed on the first score 11 in a direction from the surface of the shell 10 to the bottom of the first score 11. The plurality of step surfaces 111 may be formed by punching a plurality of times. The manufacturing efficiency of the wall where the first score 11 is located is relatively high. In addition, the plurality of step surfaces 111 substantially parallel to the surface of the shell 10 can reduce the punching forming force and increase the service life of a punch.

The width W₁ of the first score 11 is set to correspond to the dimension of the shell 10, which is conducive to guiding the wall where the first score 11 is located to preferentially crack at the first score 11 when the internal pressure of the shell 10 is extremely large, thereby effectively achieving the release of the pressure of the shell 10.

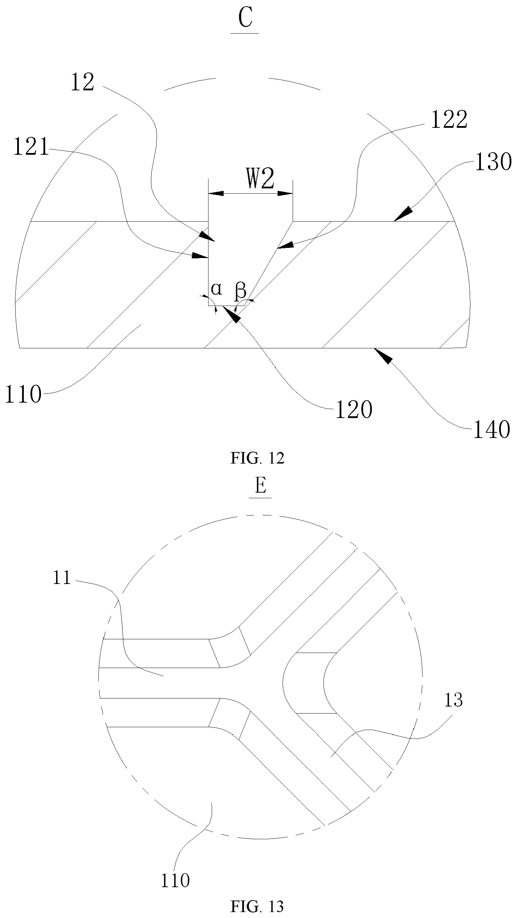

Referring to FIG. 8 and FIG. 12, FIG. 12 is an enlarged schematic structural diagram of a cross section of the shell 10 at the second score 12 in FIG. 8. In some embodiments, the width W₂ of the second score 12 exhibits a decreasing trend in a direction from the surface of the shell 10 to the bottom of the second score 12.

Specifically, the second score 12 is provided on the inner surface 130 of the bottom wall 110 and is recessed toward the outer surface 140 of the bottom wall 110. The cross-sectional shape of the second score 12 may be trapezoidal. The long side of the trapezoidal cross-section is formed on the inner surface 130 of the bottom wall 110, and the short side of the trapezoidal cross-section is formed at the bottom of the second score 12. The width W₂ of the second score 12 may gradually decrease in a direction from the inner surface 130 of the bottom wall 110 to the bottom of the second score 12. The shell 10 retained at the second score 12 is more sharply shaped at the bottom of the second score 12. When the shell 10 is subjected to a force, the stress tends to concentrate at the bottom of the second score 12 relative to the surface of the shell 10.

In this way, it is conducive to guiding the shell 10 to fold at the second score 12, so that the shell 10 is forced open to form a pressure relief opening.

The range of the width W₂ of the second score 12 is set to correspond to the width of the wall where the second score 12 is located and the distance between the first score 11 and the second score 12. This setup is beneficial for the shell 10 to fold at the second score 12 to form the pressure relief opening.

Referring further to FIG. 8 and FIG. 12, in some embodiments, a bottom surface 120, a first side surface 121, and a second side surface 122 are formed on the second score 12. The angle formed between the first side surface 121 and the bottom surface 120 is a first angle α. The angle formed between the second side surface 122 and the bottom surface 120 is a second angle β. The second angle β is greater than or equal to the first angle α, that is, α ≤ β.

Specifically, the cross-sectional shape of the second score 12 may be trapezoidal. The first side surface 121 is a surface of the second score 12 on one side that is close to the center of the wall where the second score 12 is located. The second side surface 122 is a surface of the second score 12 on one side that is close to the edge of the wall where the second score 12 is located. The first score 11 is located at the center of the wall where the second score 12 is located. The first side surface 121 may also be a surface on one side that is close to the first score 11. When the internal pressure of the shell 10 is extremely large, the shell may crack along the first score 11 toward the first side surface 121 and be forced open.

The first angle α is an angle formed by the connection between the first side surface 121 and the bottom surface 120. The second angle β is an angle formed by the connection between the second side surface 122 and the bottom surface 120. The first angle α is closer to the first score 11 relative to the second angle. In some embodiments, the first score 11 and the second score 12 are provided on the bottom wall 110 and are substantially parallel to the length direction of the shell 10. In this embodiment, the second angle β is closer to the long side of the bottom wall 110 relative to the first angle, and the first angle α is closer to the first score 11 relative to the second angle β. The first angle α is greater than or equal to 90°, that is, 90° ≤ α ≤ β.

In this way, the inclination angle of the second score 12 on one side close to the edge of the shell 10 is greater than the inclination angle of the second score on one side close to the first score 11, making it easier for the part of the shell between the first score 11 and the second score 12 to fold at the second score 12 under the impact of the pressure released from inside the shell 10 when the first score 11 cracks, thereby forming a larger pressure relief opening area.

In some embodiments, the first thickness H₁ ranges from 0.08 mm to 0.33 mm.

Specifically, in a direction from the surface where the first score 11 is located to the surface of the shell 10 on one side facing away from the first score 11, the distance between the bottom of the first score 11 and the surface of the shell 10 on one side facing away from the first score 11 is denoted as the first thickness H₁. Illustratively, the first score 11 is provided on the outer surface 140 of the bottom wall 110. The first thickness H₁ represents the distance between the bottom of the first score 11 and the inner surface 130 of the bottom wall 110 in the thickness direction of the shell 10.

For example, the first thickness H₁ may be 0.08 mm, 0.11 mm, 0.15 mm, 0.18 mm, 0.2 mm, 0.24 mm, 0.27 mm, 0.3 mm, or 0.33 mm.

In this way, the range of the first thickness H₁ may correspond to the thickness of the shell 10, which is conducive to guiding the shell 10 to preferentially crack at the first score 11 when the internal pressure of the shell 10 is extremely large. In addition, the first thickness within the corresponding range can ensure that the strength of the wall where the first score 11 is located is sufficient when the internal pressure of the shell 10 is normal.

In addition, according to different electrochemical systems of the battery cell 100, the width of the first score 11, the width of the second score 12, the first thickness, and the second thickness may be set differently, so that the shell 10 is applicable to a variety of battery cells 100 to meet diverse application requirements.

Referring again to FIG. 6, in some embodiments, a third score 13 is formed on the shell 10. The third score 13 is connected to the first score 11. The length of the third score 13 is less than the length of the first score 11.

Specifically, the third score 13 may be provided on the same surface as the first score 11. The third score 13 may extend along a straight path from a certain point on the first score 11. The extension direction of the third score 13 may form a preset angle with the length direction of the first score 11. For example, the first score 11 forms an angle of 120° with the third score 13. The position where the third score 13 is connected to the first score 11 may be at the end or midpoint of the first score 11, or at any position between the two ends of the first score 11. The shape formed by the first score 11 and the third score 13 may be in the form of a "Y", "X" or " 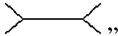 shape.

The length of the third score 13 is less than the length of the first score 11. The length of the third score 13 is less than the length of the second score 12. The length of the third score 13 may be approximately 1/2, 1/3, 2/5, or 1/4 of the length of the first score 11. The second score 12 is parallel to the first score 11. The third score 13 is inclined relative to the second score 12. One end of the third score 13 away from the first score 11 may extend beyond the second score 12 in the length direction of the first score 11.

The first score 11, the second score 12, and the third score 13 may be integrally formed on the same wall of the shell 10 by punching. The strength of the formed shell 10 at the first score 11, the second score 12, and the third score 13 is relatively large, so that the shell 10 does not rupture when the internal pressure is normal.

In this way, the third score 13 is connected to the first score 11, so that the shell 10 can be guided to crack along traces of the first score 11 and the third score 13, without excessive tearing and damaging the entire shell 10. In addition, the cracked part of the shell 10 is still attached to the wall where the first score 11 is located, which reduces the risk of a short circuit resulting from fragments flying out or even overlapping positive and negative electrodes of the battery cell assembly 20.

In some embodiments, the third score 13 extends in a direction from the first score 11 to the second score 12.

Specifically, the third score 13 extends from the joint between the first score 11 and the third score 13 toward both sides of the first score 11 in the width direction. The extension direction of the third score 13 from the first score 11 to the second score 12 may form a preset angle with the length direction of the second score 12. For example, the third score 13 forms an angle of 60° or 120° with the second score 12. The third score 13 may extend from the end or center of the first score 11, or from any position between the two ends of the first score 11 to the vicinity of the end of the second score 12.

In this way, the shell 10 may be forced open along the traces of the first score 11 and the third score 13 from the joint between the first score 11 and the third score 13 toward both sides and fold at the second score 12. Such an extension direction is conducive to the formation of the pressure relief opening.

In some embodiments, the third score 13 is connected to the end of the first score 11.

Referring to FIG. 6 and FIG. 13, FIG. 13 is an enlarged schematic structural diagram of the shell 10 at the joint between the third score 13 and the first score 11 in FIG. 6. The third score 13 may be in the form of a straight line segment, with two ends in the extension direction of the third score 13. In some embodiments, one of the ends of the third score 13 is connected to one end of the first score 11 in the length direction of the first score 11. The third score 13 may extend from the end of the first score 11 to the end of the second score 12.

In this way, the third score 13 is joined to a crack path from the end of the first score 11, which is conducive to expanding the cracking area of the shell 10.

Referring further to FIG. 6, in some embodiments, there are a plurality of third scores 13, and the end of each first score 11 is connected to the third score 13.

Specifically, there is one first score 11. The first score 11 is provided with two ends in the length direction. Each of the ends of the first score 11 may be connected to two third scores 13. In this embodiment, four third scores 13 are connected to the first score 11. The four third scores 13 may extend in the upper left, upper right, lower right, and lower left directions of the first score 11, respectively. The first score 11 and the third score 13 form a roughly 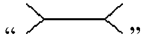 -shaped trace. The four third scores 13 may extend toward the four ends of the second scores 12 on both sides of the first score 11, respectively. The end of the third score 13 away from the first score 11 may be close to the end of the second score 12 in the corresponding extension direction.

In this way, the plurality of third scores 13 may all be used as cracking paths, further increasing the cracking range and improving the pressure relief efficiency of the battery cell 100.

Referring to FIG. 13, in some embodiments, the joint between the first score 11 and the third score 13 is subjected to a passivation treatment.

Specifically, a round corner or a transition surface may be provided at the joint between the first score 11 and the third score 13 for passivation treatment, so that a sharp angle will not be formed between the first score 11 and the third score 13. It can be understood that lines at the joint between the first score 11 and the third score 13 are more likely to form a sharp angle, resulting in stress concentration.

In this way, by implementing a passivation treatment to create a smooth transition at the joint between the first score 11 and the third score 13, stress is dispersed, thereby reducing the risk of liquid leakage of the battery cell 100 due to cracking of the shell 10 under normal pressure.

In some embodiments, the width of the third score 13 is equal to the width of the first score 11.

Specifically, the width range of the third score 13 and the width range of the first score 11. The third score 13 and the first score 11 may both be provided on the outer surface 140 of the bottom wall 110. A platform surface (not shown), which is connected to the step surface 111 and parallel to the outer surface 140, may be formed between the outer surface 140 of the bottom wall 110 and the bottom of the third score 13. The opening width of the third score 13 on the platform surface may be greater than the width of the bottom of the third score 13.

The cross-sectional shape of the third score 13 may be completely identical to the cross-sectional shape of the first score 11, so as to facilitate punching.

In this way, it is beneficial for the shell 10 to continue to crack along the trace of the third score 13 after cracking at the first score 11.

According to some embodiments of the present application, the present application further provides a battery 200. The battery includes the battery cell 100 according to any one of the above solutions.

According to some embodiments of the present application, the present application further provides an electric device. The electric device includes the battery 200 according to any one of the above solutions, and the battery 200 is configured to provide electric energy for the electric device.

The electric device may be any one of the aforementioned devices or systems that use the battery 200.

According to some embodiments of the present application, a shell 10 for a battery cell 100 is provided. A first score 11 and a second score 12 are formed on the bottom wall 110 of the shell 10. The second score 12 is located on both sides of the first score 11 in the width direction of the first score 11 and is spaced apart from the first score 11 in the width direction of the first score 11. The thickness H₁ of the shell 10 at the first score 11 is less than the thickness H₂ of the shell 10 at the second score 12. When the internal pressure of the shell 10 is extremely large, the shell 10 preferentially cracks at the first score 11 due to the smaller thickness of the shell 10 at the first score 11, releasing the pressure of the shell 10. The cracked part of the shell 10 is forced open from the first score 11 and, under the internal pressure of the shell 10, folds at the second score 12 with the second score 12 as a fold line to form a pressure relief opening, so that the gas inside the shell 10 is effectively discharged, thereby further avoiding the risk of explosion of the battery cell 100 due to excessive internal pressure of the shell 10.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A shell, configured for a battery cell, wherein a first score and a second score are formed on a same wall of the shell, the second score is located on one side in a width direction of the first score, and projections of the first score and the second score in a thickness direction of the shell are spaced apart from each other; a thickness of the shell at the first score is a first thickness, and a thickness of the shell at the second score is a second thickness, the first thickness being less than the second thickness.

2. The shell according to claim 1, wherein the shell comprises a bottom wall and a side wall connected to the bottom wall, an opening is formed on one side of the side wall away from the bottom wall, and the first score and the second score are formed on the bottom wall.

3. The shell according to claim 1 or 2, wherein the shell comprises an inner surface and an outer surface, the first score is provided on the outer surface, and the second score is provided on the inner surface.

4. The shell according to any one of claims 1 to 3, wherein in the width direction of the first score, distances between the first score and the second score are equal at all points.

5. The shell according to claim 4, wherein the first score and the second score are arranged in parallel.

6. The shell according to claim 4 or 5, wherein in an arrangement direction of the first score and the second score, a distance between the first score and the second score is a first distance, and a ratio of the first distance to a dimension of the shell in the arrangement direction ranges from 1/8 to 1/3.

7. The shell according to any one of claims 4 to 6, wherein a length of the second score is greater than a length of the first score, and in an extension direction of the first score, an end of the second score exceeds an end of the first score.

8. The shell according to any one of claims 1 to 7, wherein in the width direction of the first score, the second scores are provided on both sides of the first score.

9. The shell according to claim 8, wherein the second scores, which are located on both sides of the first score, respectively, are symmetrically arranged relative to the first score.

10. The shell according to any one of claims 1 to 9, wherein the length of the first score is parallel or perpendicular to an edge of the wall where the first score is located.

11. The shell according to any one of claims 1 to 10, wherein a center of the first score coincides with a center of the wall where the first score is located.

12. The shell according to any one of claims 1 to 11, wherein a width of the first score exhibits a decreasing trend in a direction from a surface of the shell to a bottom of the first score.

13. The shell according to claim 12, wherein a step surface is formed on the first score, and the step surface is substantially parallel to the surface of the shell.

14. The shell according to any one of claims 1 to 13, wherein a width of the second score exhibits a decreasing trend in a direction from the surface of the shell to a bottom of the second score.

15. The shell according to claim 14, wherein a bottom surface, a first side surface, and a second side surface are formed on the second score; an angle formed between the first side surface and the bottom surface is a first angle, and an angle formed between the second side surface and the bottom surface is a second angle, the second angle being greater than or equal to the first angle.

16. The shell according to any one of claims 1 to 15, wherein the first thickness ranges from 0.08 mm to 0.33 mm.

17. The shell according to any one of claims 1 to 16, wherein a third score is formed on the shell, the third score is connected to the first score, and a length of the third score is less than the length of the first score.

18. The shell according to claim 17, wherein the third score extends in a direction from the first score to the second score.

19. The shell according to claim 17 or 18, wherein the third score is connected to the end of the first score.

20. The shell according to claim 19, wherein there are a plurality of third scores, and an end of each first score is connected to the third score.

21. The shell according to any one of claims 17 to 20, wherein a joint between the first score and the third score is subjected to a passivation treatment.

22. The shell according to any one of claims 17 to 21, wherein a width of the third score is equal to the width of the first score.

23. A battery cell, comprising the shell according to any one of claims 1 to 22.

24. The battery cell according to claim 23, wherein the battery cell comprises an end cover and a battery cell assembly, and an opening is formed on the shell; the opening is lidded with the end cover, and the battery cell assembly is arranged in the shell.

25. A battery, comprising the battery cell according to claim 23 or 24.

26. An electric device, comprising the battery cell according to claim 23 or 24 or the battery according to claim 25.
